# EUROPÄISCHE PATENTANMELDUNG

(11) **EP 1 366 802 A1**
(43) Veröffentlichungstag der Anmeldung: **03.12.2003**
(21) Anmeldenummer: 03010439.2
(22) Anmeldetag: 09.05.2003
(51) Int. Cl.: B01D 53/94, F01N 3/20

(54) **Verfahren zur Reinigung einer Spritzdüse für eine Harnstofflösung für die katalytische NOx-Reduktion von Abgasen**

(30) Priorität: 28.05.2002 DE 10223766
(71) Anmelder: MAN Nutzfahrzeuge Aktiengesellschaft, 80976 München (DE)
(72) Erfinder: Kreutmair, Josef, Dipl.-Ing. (FH), 85276 Pfaffenhofen (DE); Knetsch, Holger, 85221 Dachau (DE); Raschke, Michael, Dipl.-Ing., 28777 Bremen (DE)

(57) **Zusammenfassung**

Verfahren zur Reinigung einer Spritzdüse für eine Harnstofflösung für die katalytische NOₓ-Reduktion von Abgasen eines Fahrzeugdieselmotors, wobei die Harnstofflösung als Reduktionsmittel mittels Signalen aus einem Bordrechner oder gleichwertigen Rechner dosiert durch eine Spritzdüse auf einen Hydrolysekatalysator aufgebracht wird, dadurch gekennzeichnet, dass, abhängig von betriebsspezifischen Daten, beispielsweise kurz nach jedem Neustart des Dieselmotors und/oder nach jeder fünften Harnstoffdosierung, sofort nach dem Ende der Harnstoffdosierung und zeitlich begrenzt, Wasser oder eine Reinigungsflüssigkeit zum Reinigen der Spritzdüse 17 einbringbar ist.

## Beschreibung

Die Erfindung betrifft ein Verfahren nach dem Oberbegriff des Anspruches 1.

Ein Verfahren dieser Art ist aus der EP 0 558 452 B1 bekannt. Das genannte Verfahren ist allerdings für stationäre Anlagen, bei denen Vorgänge und betriebsspezifische Daten unterschiedlich zu denen einer Fahrzeuganlage sind.

Bei dem genannten Verfahren wird vorzugsweise vor dem Aktivieren der Abgasreinigung Druckluft durch die Spritzdüse geblasen, damit diese abkühlt.

Anschließend wird Harnstofflösung in einer vorausbestimmten Dosierung zugeführt. Durch das Beenden der genannten Dosierung wird der Reaktionsprozess beendet. Daran anschließend wird mit Druckluft der Harnstoffleiter und die Düse sauber ausgeblasen.

Da bei einem Fahrzeugdieselmotor die Reaktionsvorgänge für die Reinigung der Abgase viel schneller beginnen müssen und ein Ende der genannten Reaktionsvorgänge ebenso plötzlich erfolgen muss, ist das Verfahren aus der EP 0 558 452 B1 für Fahrzeugdieselmotoren nicht geeignet.

Selbst mit feinst bearbeiteten Spritzdüsen und Drucklufteinblasung am Ende jedes Reaktionsprozesses ist eine Sauberhaltung der Spritzdüse nicht möglich.

Aufgabe der Erfindung ist es, ein fahrzeuggeeignetes Verfahren zur Sauberhaltung einer Spritzdüse für Harnstoffeindüsung darzustellen.

Die Aufgabe wird erfindungsgemäß durch die Merkmale des Anspruches 1 gelöst.

Dadurch, dass, abhängig von betriebsspezifischen Daten und zeitlich begrenzt, eine Reinigungsflüssigkeit in die Harnstoffleitung nach dem Dosierventil für den Harnstoff einbringbar ist, kann die Spritzdüse sauber gehalten werden.

Ein diesbezüglich betriebsspezifisches Datum ist beispielsweise ein Neustart des Fahrzeuges.

Der Bordrechner weiß, wieviel Zeit zwischen dem Abstellen des Fahrzeuges und der wieder Inbetriebnahme verstrichen ist. Da die Spritzdüse inmitten des Abgasstromes ist und im Arbeitsbetrieb des Fahrzeuges sehr heiß werden kann, ist es vorteilhaft, auch nach einer kurzen Außerbetriebsetzung, z. B. 3 Minuten, in der die Spritzdüse abkühlen kann, die Spritzdüse mit der Reinigungsflüssigkeit prophylaktisch zu reinigen.

Der Bordrechner könnte deshalb nach jedem Abstellen des Fahrzeuges mit einer Abstellzeit, die länger als 3 Minuten ist, ein Signal für das Reinigen der Spritzdüse geben. Auch könnte eine längere Bergabfahrt, in der der Motor nicht gefeuert wird, zum Reinigen der Spritzdüse genutzt werden. Weiterhin könnte in einem längeren Leerlauf- oder Teillastbetrieb ein Reinigungsvorgang der Spritzdüse erfolgen.

Es könnte aber auch oder zusätzlich beispielsweise sofort nach jeder fünften Harnstoffeindüsung ein genannter Reinigungsvorgang erfolgen.

Bei Fahrzeugen, die längere Zeit Vollast oder eine hohe Teillast fahren, ist es auch denkbar, die Dosierung der Harnstofflösung kurz zu unterbrechen und in dieser Zeit einen Reinigungsvorgang durchzuführen, weil bei derartigen Betriebsarten aus der Harnstofflösung, infolge einer sehr heißen Spritzdüse, sich im Betrieb bereits Kristalle in der Zufuhrleitung und der Spritzdüse absetzen können.

In dem letztgenannten Fall ist demnach ein von der ununterbrochenen Betriebszeit des Dieselmotors abhängiger Reinigungsvorgang vorzusehen. Die Zeitdauer für einen Reinigungsvorgang kann relativ kurz sein und beispielsweise 10 sec. betragen.

Die Reinigungsflüssigkeit kann beispielsweise ein Wasser-Alkoholgemisch sein, ähnlich wie dies bei der Reinigungsflüssigkeit für die Scheibenwaschanlage der Fall ist, jedoch ohne Duftstoffe.

Der Einsatz einer solchen Reinigungsflüssigkeit wäre beispielsweise für mitteleuropäische Einsatzzonen mit Temperaturen bis ca. -25°C denkbar. Der Alkoholgehalt sollte nicht zu hoch sein, da es sonst im Abgasschalldämpfer oder im Katalysatorgehäuse zu einer Verpuffung kommen kann.

In Gebieten bzw. zu bestimmten Jahreszeiten, in denen kein Frost auftritt, ist auch normales, am besten kalkfreies Wasser verwendbar.

Für Fahrzeuge, die in sehr kalten Gebieten eingesetzt werden, muss die Reinigungsanlage, mit Ausnahme der Spritzdüse und der Leitung im Abgasschalldämpfer oder Katalysatorgehäuse, wärmeisoliert und, falls sich dies herausstellt, beheizbar sein.

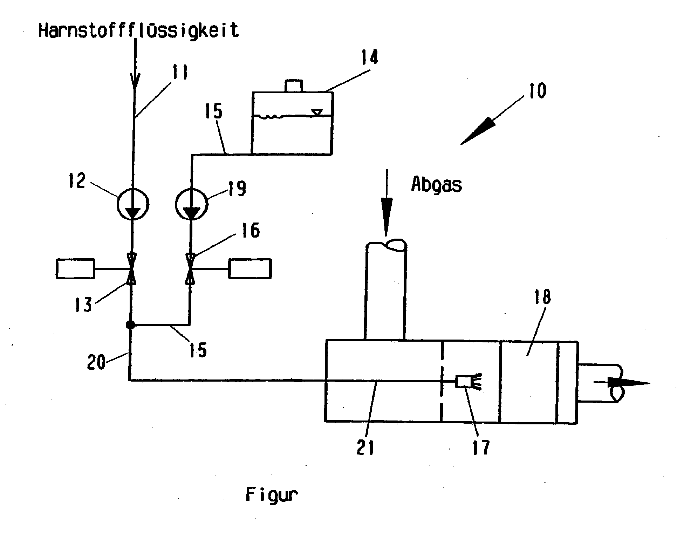

In der Zeichnung ist ein Ausführungsbeispiel der Erfindung schematisch dargestellt.

Die Figur zeigt eine Reinigungsanlage 10, mit der entsprechenden Peripherie. Die Harnstoffdosierung erfolgt mit der Leitung 11, einer Pumpe 12, einem Regelventil 13, mit einer Leitung 20, 21 zur Spritzdüse 17.

Der Leitungsteil 21 und die Spritzdüse 17 sind in einem Abgasschalldämpfer oder Katalysatorgehäuse im Abgasstrom angeordnet.

Das Teil 18 ist ein Hydrolysekatalysator 18.

Die Reinigungsanlage 10 beinhaltet den Flüssigkeitsbehälter 14, eine Leitung 15, eine Förderpumpe 19 und ein Ventil 16 mit Betätigungseinrichtung, z. B. elektrisch. Die Dosierung der Harnstoffflüssigkeit erfolgt durch Signale aus dem Bordrechner (nicht gezeichnet).

Die Reinigungsvorgänge erfolgen nach betriebsspezifischen Daten des Fahrzeuges, auch durch Signale aus dem Bordrechner. Die Reinigungsanlage 10 ist vorzugsweise einschließlich des Behälters 14 bis einschließlich der Leitung 20 wärmeisoliert ausgeführt und gegebenenfalls beheizbar.

## Patentansprüche

1. Verfahren zur Reinigung einer Spritzdüse für eine Harnstofflösung für die katalytische NOₓ-Reduktion von Abgasen eines Fahrzeugdieselmotors, wobei die Harnstofflösung als Reduktionsmittel mittels Signalen aus einem Bordrechner oder gleichwertigen Rechner dosiert durch eine Spritzdüse auf beispielsweise einen Hydrolysekatalysator oder anderen Katalysator aufgebracht wird, **dadurch gekennzeichnet, dass**, abhängig von betriebsspezifischen Daten, beispielsweise kurz nach jedem Neustart des Dieselmotors und/oder nach einer bestimmten Anzahl von Harnstoffdosierungen, sofort nach dem Ende der Harnstoffdosierung und zeitlich begrenzt, Wasser oder eine Reinigungsflüssigkeit zum Reinigen der Spritzdüse 17 einbringbar ist.

2. Verfahren nach Anspruch 1, **dadurch gekennzeichnet, dass** als Reinigungsflüssigkeit ein Wasser-Alkoholgemisch verwendet ist.

3. Verfahren nach Anspruch 1, **dadurch gekennzeichnet, dass** der Behälter (14), die Leitungen (15, 20), das Ventil (16) und die Pumpe (19) wärmeisoliert und gegebenenfalls beheizbar sind.
